**Europäisches Patentamt**

**European Patent Office**

**Office européen des brevets**

(11) Veröffentlichungsnummer: **0 008 124**
**A1**

(12) # EUROPÄISCHE PATENTANMELDUNG

(21) Anmeldenummer: 79102903.6

(22) Anmeldetag: 10.08.79

(51) Int. Cl.³: **G 09 B 5/06**, G 06 F 15/20

(30) Priorität: 10.08.78 DE 2835077

(43) Veröffentlichungstag der Anmeldung: 20.02.80
Patentblatt 80/4

(84) Benannte Vertragsstaaten: BE CH DE FR GB IT LU NL SE

(71) Anmelder: Gebauer, Rainer, Dr., Am Schellberg 2,
D-6232 Bad Soden-Neuenhain (DE)

(72) Erfinder: Gebauer, Rainer, Dr., Am Schellberg 2,
D-6232 Bad Soden-Neuenhain (DE)

(74) Vertreter: Bermühler, Otto, Dipl.-Ing.,
Degenfeldstrasse 10, D-8000 München 40 (DE)

(54) Video-, Informations-, Instruktions- und Dokumentationsgerät für programmierten Unterricht.

(57) Video-, Informations-, Instruktions- und Dokumentationsgerät für programmierten Unterricht, bei dem ein Aufzeichnungsträger (Videoband mit Speicher- und Steuerspur) (1) mit einem Computer (Rechenwerk mit Arbeitsspeicher) (2), einem Monitor/TV-Bildschirm (6) und einer Eingabe (4) kombiniert ist, wobei dem Computer (2) zwei von der Eingabe (4) gesteuerte Schaltungen (10, 14) zugeordnet sind, von denen die erste Schaltung (10) zwischen Aufzeichnungsträger (1) und Computer (2) und die zweite Schaltung (14) zwischen Computer (2) und Bildschirm angeordnet ist und eine Leitung (12) vorgesehen ist, die die erste Schaltung (10) unter Umgehung des Computers (2) direkt mit der Schaltung (14) verbindet, um wahlweise von dem Aufzeichnungsträger (1) den Videospot oder von dem Computer (2) das Computerprogramm auf den Bildschirm (6) übertragen zu können.

EP 0 008 124 A1

0008124

Dr. Rainer Gebauer
D-6232 Bad Soden- Neuenhain

Video-, Informations-, Instruktions- und
Dokumentationsgerät für programmierten Unterricht.

Bisher gibt es u.a. zwei Möglichkeiten wirksamer Information über technische Medien, die Bedeutung gewonnen
haben:

A) über eine programmierte Information per Computer. Diese Möglichkeit hat den Vorteil, daß der
Lernende sich beim Lernen aktiv beteiligt, indem er bestimmte Aufgaben löst und nach seinem
eigenen Tempo, unter Berücksichtigung seines Vorwissens und seiner Lernleistung gesteuert werden
kann;

B) über Videowiedergabe per Videorecorder. Diese
Möglichkeit hat vor allem den Vorteil der größeren Anschaulichkeit durch die Einbeziehung von
Ton und Bild in den Unterricht.

Von der technischen Seite her besteht die Einrichtung für die Möglichkeit A aus einem Computer, ggfs. einem Mikrocomputer mit den Bestandteilen:
Informationsträger (Floppy Disk, Tonbandkassette usw.), Arbeitsspeicher,
Eingabeeinheit, (z.B. über eine Tastatur),
Ausgabeeinheit, (z.B. Bildschirm oder Drucker).

Die Einrichtung für die Möglichkeit B besteht z.B. aus einem Videorecorder mit Monitor/Fernsehempfänger mit schnellem Vor- und Rücklauf sowie einer Wiedergabefunktion über den angeschlossenen Bildschirm.

Der vorliegenden Erfindung liegt die Aufgabe zugrunde, die Vorteile der vorerwähnten Informationsmedien miteinander zu verbinden und dabei Bauteile einzusparen. Die Lösung dieser Aufgabe erfolgt erfindungsgemäß mit der in den Ansprüchen aufgeführten Kombination von Bauelementen.

Möglichkeit A

| Speicher z.B. Kassette | — | Rechenwerk mit Arbeitsspeicher | | Monitor/ Bildschirm |
| | | | | |
| | | Eingabe | | |

Möglichkeit B

| Videoband | | Monitor/TV Bildschirm |

Gerät nach der Erfindung

| Videoband mit Speicher auf Steuerspur | — | Rechenwerk mit Arbeitsspeicher | | Monitor/TV- Bildschirm |
| | | | | |
| | | Eingabe | | |

Bei dem neuen Gerät fallen folgende Bauteile weg:
a. Der Computer-Bildschirm. Die Ausgabe des Computertextes kann auch über den Videomonitor oder Fernseh-Bildschirm erfolgen.

b. Der Informationsspeicher. Statt auf ein Tonband wird das Computerprogramm gleich auf eine freie Steuerspur des Videobandes gespielt.

Die neue Gerätekombination ermöglicht einen vollwertigen programmierten, computergesteuerten Unterricht unter voller Einbeziehung der Möglichkeiten der Videowiedergabe. Eingesetzt wird hierbei als Software-Träger eine Videokassette oder ein Videoband, die folgendes enthält:

1. Das Computer-Programm,
2. Videopassagen und
3. entsprechende ansteuerbare, für den Computer lesbare Positionscodierungen zu den Videopassagen.

Wie das System im einzelnen funktioniert, soll das folgende Beispiel zeigen:

Der Lernende legt die Videokassette in den Videorecorder ein und überspielt das Computerprogramm in den Arbeitsspeicher des Computers. Der Computer meldet ihm über das Videobild, daß mit dem Lernen begonnen werden kann, z.B. indem er eine bestimmte Eingabe über die Tastatur fordert oder auch schon eine erste Information mit Aufgabenstellung auf dem Bildschirm erscheinen läßt. Je nach Reaktion des Teilnehmers (richtige oder falsche Antwort, Bitte um weitere Erklärung usw.) führt der Computer den Teilnehmer durch das Lernprogramm. Dabei kann jederzeit eine Bildpassage vom Videoband einbezogen werden, die vom Computerprogramm individuell angesteuert wird, weil der Computer ja die Anfangs- und End-Codierung der einzelnen Videopassagen auf der Steuerspur lesen kann.

Die Umschaltung des Videoschirms vom Computer auf den Videorecorder und zurück ist durch ein Relais erreichbar. Die schnelle Ansteuerung einzelner Videopassagen erfolgt über einen entsprechenden Computerbefehl an die Recorderfunktion ".Schnell-Vorlauf" oder "Schnell-Rücklauf".

In vereinfachten Formen kann anstelle des Videorecorders auch ein Tonband oder ein Tonbildschau-Wiedergabegerät eingesetzt werden; dann müßte z.B. der Computer-Bildschirm erhalten bleiben oder die Computer-Informationen müßten von vornherein auf Dias übertragen werden.

Die geschilderte Computer-Video-Gerätefiguration geht von einem Einzel-Lernplatz und dem Einsatz eines dezentralen (ggfs. auch schon Micro-) Computers aus. Das System läßt sich jedoch auch für einen Gruppenunterricht adaptieren, indem die Eingaben nicht vom Schüler, sondern vom Lehrer vorgenommen werden.

Außerdem läßt sich das System auch insofern umstellen, als das Programm von einer Zentrale auf einzelne Lern-Terminale überspielt wird (Videospur plus Programm-Spur), sei es über Kabelfernsehen, sei es über eine Standleitung o.ä. Der Vorteil im Vergleich zum Einsatz eines Zentralcomputers oder einer Zentral-Video-Einheit besteht hier darin, daß die Leitung zur Zentrale nur für die Programmüberspielung benötigt wird und dann während des Lernprozesses wieder frei wird.

Der Einsatz eines Druckers als Ausgabeeinheit könnte zusätzliche Möglichkeiten, z.B. durch den dezentralen Ausdruck eines Teilnehmerzeugnisses mit Bewertung der Lernleistung, eröffnen.

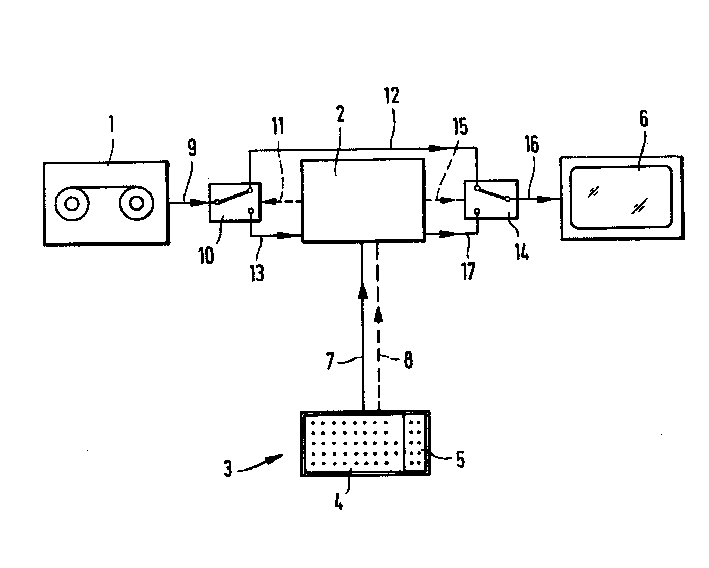

In der Zeichnung ist als Ausführungsbeispiel des Gegenstandes der Erfindung eine Gerätekombination und deren Schaltschema dargestellt.

Die Gerätekombination besteht aus dem Aufzeichnungsträger 1 mit den Anfangs- und Endadressen des Videospots und dem Computer-Arbeitsprogramm, dem Computer 2, der vom Aufzeichnungsträger 1 gespeist (Programm überspielt) und von der Eingabe 3 über die Leitungen 7, 8 gesteuert wird, und dem Bildschirm 6. Die Eingabe 3 weist eine Antwort-Vortastatur 4 und eine Stenogramm-Tastatur 5 auf Außerdem sind zwei Schaltungen 10, 14 vorgesehen, wobei der Bildschirm 6, der gegebenenfalls mit einem eingebauten Adapter ausgestattet ist, der von der Schaltung 14 gesteuert wird.

Die Schaltung 10 wird vom Computer 2 über die Steuerleitung 11 gesteuert und verbindet die Bildaufzeichnung des Aufzeichnungsträgers 1 entweder über die Leitungen 9, 12 mit dem Bildschirm 6 oder das Computer-Arbeitsprogramm des Aufzeichnungsträgers 1 über die Leitung 13 mit dem Computer 2.

Die Schaltung 14, die vom Computer 2 über die Steuerleitung 15 gesteuert wird, dient zur Übertragung des Videospots vom Aufzeichnungsträger 1 über die Leitungen 9, 12, 16 zum Bildschirm 6 oder zur Übertragung des Computertextes bzw. Bildes aus dem Computer 2 über die Leitungen 17, 16 zum Bildschirm 6.

0008124

Patentansprüche:

1. Video-, Informations-, Instruktions- und Dokumentationsgerät für programmierten Unterricht, gekennzeichnet durch die Kombination eines Aufzeichnungsträgers (Videoband mit Speicher- und Steuerspur) (1),
mit einem Computer (Rechenwerk mit Arbeitsspeicher)
(2), einem Monitor/TV-Bildschirm (6) und einer Eingabe (4).

2. Video-, Informations-, Instruktions- und Dokumentationsgerät nach Anspruch 1, dadurch gekennzeichnet,
daß dem Computer (2) zwei Schaltungen (1o, 14) zugeordnet sind, die von der Eingabe (4) gesteuert werden,
wobei die erste Schaltung (10) zwischen Aufzeichnungsträger (1) und Computer (2) und die zweite Schaltung
(14) zwischen Computer (2) und Bildschirm (6) angeordnet sind und eine Leitung (12) vorgesehen ist, die
die erste Schaltung (10) unter Umgehung des Computers
(2) direkt mit der Schaltung (14) verbindet.

# EUROPÄISCHER RECHERCHENBERICHT

0008124

Nummer der Anmeldung

EP 79 10 2903

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | DE - A - 2 132 240 (LICENTIA PATENTVERWALTUNGS GmbH) <br><br> * Ansprüche 1-2, 4-6; Seite 3, Absatz 2 - Seite 5, Absatz 2; Seite 6, Absatz 2; Seite 8, Absatz 1; Figur * <br><br> -- | 1-2 | G 09 B 5/06 <br> G 06 F 15/20 |
| | US - A - 3 629 844 (ALLIED MANAGE-MENT & SYSTEMS CORP.) <br><br> * Ansprüche 1-13; Spalte 2, Zeile 55 bis Spalte 3, Zeile 60; Spalte 23, Zeilen 33-53; Figur 1 * <br><br> ---- | 1-2 | |

**RECHERCHIERTE SACHGEBIETE (Int. Cl. 3)**

G 09 B 5/06
        7/04
G 06 F 15/20
H 04 N 7/18

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-11-1979 | FRANSEN |